# EUROPÄISCHE PATENTSCHRIFT

(11) **EP 1 044 240 B1**
(45) Veröffentlichungstag und Bekanntmachung des Hinweises auf die Patenterteilung: **10.04.2002**
(21) Anmeldenummer: 98901242.2
(22) Anmeldetag: 04.02.1998
(51) Int. Cl.: C08K 5/20, F16L 9/12

(54) **ROHR, INSBESONDERE DRUCKROHR**
PIPE, ESPECIALLY A PRESSURE PIPE
TUYAU, EN PARTICULIER TUYAU POUR FLUIDE SOUS PRESSION

(43) Veröffentlichungstag der Anmeldung: 18.10.2000
(73) Patentinhaber: PCD-Polymere Gesellschaft m.b.H., A-2323 Schwechat-Mannswörth (AT)
(72) Erfinder: KONRAD, Roland, A-4040 Linz (AT); EBNER, Karl, A-4540 Bad Hall (AT); BERNREITNER, Klaus, A-4010 Linz (AT); WOLFSCHWENGER, Johannes, A-4491 Niederneukirchen (AT)
(74) Vertreter: Hübscher, Helmut, Dipl.-Ing.
(86) Internationale Anmeldenummer: AT9800023
(87) Internationale Veröffentlichungsnummer: WO9940151

(56) Entgegenhaltungen:
- EP-A- 0 177 961
- EP-A- 0 557 121
- PATENT ABSTRACTS OF JAPAN vol. 096, no. 008, 30. August 1996 & JP 08 100088 A (NEW JAPAN CHEM CO LTD), 16. April 1996
- PATENT ABSTRACTS OF JAPAN vol. 018, no. 019 (C-1152), 13. Januar 1994 & JP 05 255551 A (NEW JAPAN CHEM CO LTD), 5. Oktober 1993
- PATENT ABSTRACTS OF JAPAN vol. 017, no. 582 (C-1123), 22. Oktober 1993 & JP 05 170932 A (MITSUBISHI PETROCHEM CO LTD), 9. Juli 1993

## Beschreibung

Die Erfindung bezieht sich auf ein Rohr, insbesondere Druckrohr, mit einem aus Polypropylen extrudierten Rohrkörper.

Wegen der vorteilhaften Eigenschaften von Polypropylen vor allem hinsichtlich einer guten Medienbeständigkeit und einer guten Druckbelastbarkeit werden aus Poypropylen extrudierte Rohrkörper häufig für Rohrleitungen in chemischen Anlagen und Einrichtungen eingesetzt. Trotz dieser guten Werkstoffeigenschaften kann es unter ungünstigen Bedingungen bei einer großen Schlagbeanspruchung des Rohrkörpers zur Ausbildung eines Risses kommen, der sich explosionsartig mit Schallgeschwindigkeit ausbreitet, insbesondere bei unter einem entsprechenden Innendruck stehenden Rohrkörpern, wie dies beispielsweise bei Gasleitungen der Fall ist. Der Widerstand gegen eine solche schnelle Rißfortpflanzung wird durch ein genormtes Verfahren (z. B. DIS 13477) ermittelt, indem ein mit einem bestimmten Innendruck beaufschlagter Rohrkörper mit einem Projektil unter vorgegebenen Bedingungen so beschossen wird, daß ein sich ausbreitender Riß entsteht. Die Rißlänge wird als Maß für den Widerstand gegen eine schnelle Rißausbreitung gewertet, wobei von einem sich schnell ausbreitenden Riß gesprochen wird, wenn die Rißlänge das 4,7fache des Außendurchmessers des Rohrkörpers übersteigt.

Der Erfindung liegt somit die Aufgabe zugrunde, ein Rohr, insbesondere ein Druckrohr, der eingangs geschilderten Art so auszugestalten, daß ein hoher Widerstand gegenüber einer schnellen Rißausbildung sichergestellt werden kann.

Die Erfindung löst die gestellte Aufgabe dadurch, daß der Rohrkörper aus einem Polypropylen in einer überwiegend hexagonal kristallisierten β-Form mit einem auf einem Amid basierenden Nukleierungsmittel besteht.

Es hat sich in überraschender Weise gezeigt, daß ein Rohrstück, das aus einem nicht in einer üblichen monoklinen α-Kristallisationsform, sondern in einer hexagonalen β-Kristallisationsform vorliegenden Polypropylen besteht, dann einen hohen Widerstand gegenüber einer schnellen Rißfortpflanzung aufweist, wenn die Kristallisation des Polypropylens aus der Schmelze in Gegenwart eines β-Nukleierungsmittels auf der Basis eines Amids erfolgt. Obwohl verschiedene Nukleierungsmittel auf Amidbasis eingesetzt werden könen, hat sich in diesem Zusammenhang ein β-Nukleierungsmittel aus N,N'-Dicyclohexyl-2,6-Naphtalindicarboxamid als besonders vorteilhaft erwiesen.

Als Keimbildner für die β-Kristallisationsform des Polypropylens sind verschiedene Nukleierungsmittel bekannt, wobei die auf der Basis von Amiden (EP 0 557 721 A2) den Vorteil einer besonders wirkungsvollen Keimbildung mit dem Vorteil einer Farbneutralität verbinden sollen. Wegen des niedrigeren Schmelzpunktes und des geringeren Verformungswiderstandes unter Wärmeeinwirkung werden diese in β-Form kristallisierten Polypropylen-Werkstoffe vor allem für Verpackungen, Platten und Folien eingesetzt, insbesondere wenn diese Werkstücke bedruckt werden sollen. Ein solcher Stand der Technik kann somit keine Anregung für die Lösung der der Erfindung zugrundeliegenden Aufgabe geben.

Anhand der folgenden Ausführungsbeispiele soll die überraschende Wirkung der Erfindung im Vergleich zu einem herkömmlichen Rohrkörper aus einem Polypropylen in einer überwiegenden α-Kristallisationsform verdeutlicht werden:

### Beispiel 1

Einem homopolymeren Polypropylen wurden 0,1 Gew.% N,N'-Dicyclohexyl-2,6-Naphtalindicarboxamid als β-Nukleierungsmittel mit üblichen Additiven (0,1 Gew. % Glycerinmonostearat, 0,3 Gew.% Pentaeryhrityl-tetrakis[3-(3,5-di-tert.butyl-4-hydroxyphenyl]-propionat], 0,1 Gew.% Tris-(2,4-ditert.butylphenyl)-phosphit, 0,1 Gew.% Calciumstearat und 0,5 Gew.% β,β'-Thiodipropionsäuredistearylester) zugemischt und aus diesem Werkstoff unter üblichen Bedingungen ein Rohrkörper extrudiert, der eine Wanddicke von 10 mm und einen Außendurchmesser von 110 mm aufwies.

### Beispiel 2

Einem homopolymeren Polypropylen wurden 0,1 Gew.% N,N'-1,4-Cyclohexanbisbenzamid als β-Nukleierungsmittel mit auch im Beispiel 1 eingesetzten Additiven zugemischt und unter den Bedingungen des Beispiels 1 ein Rohrkörper gleicher Abmessungen extrudiert.

### Beispiel 3

Einem Polypropylen gemäß den Beispielen 1 und 2 wurde ein nicht auf einem Amid basierendes β-Nukleierungsmittel aus 0,1 Gew.% Azelainsäure und 0,1 Gew.% Calciumcarbonat mit den gleichen Additiven zugemischt und wieder ein Rohrkörper mit den gleichen Abmesseungen hergestellt.

### Beispiel 4

Einem den übrigen Beispielen entsprechendes Polypropylen wurde neben den bereits angegebenen Additiven 0,1 Gew.% Talkum als α-Keimbildner hinzugefügt, um einen Rohrkörper gleicher Abmessungen aus einem in üblicher Weise eine α-Kristallisationsform aufweisenden Polypropylen zu erhalten.

Entsprechend den Versuchsbedingungen nach der Norm DIS 13 477 wurden die eine Länge von 775 mm aufweisenden Rohrkörper gemäß den Beispielen 1 bis 4 im Prüfmedium Luft unter einem Innendruck von 4,5 bar mit einer Projektilgeschwindigkeit von 20 m/s bei einer Temperatur von 0 +/-2° C beschossen. Aus der nachstehenden Tabelle können die Versuchsergebnisse abgelesen werden:

| | | | | |
|---|---|---|---|---|
| Rohrkörper | Beispiel 1 | Beispiel 2 | Beispiel 3 | Beispiel 4 |
| Rißlänge [mm] | 240 | 270 | 532 | 645 |

Aus diesen Versuchsergebnissen erkennt man unmittelbar, daß die Rohrkörper gemäß den Beispielen 1 und 2 aus einem Polypropylen in β-Kristallisationsform mit einem Amid als Nukleierungsmittel einen wesentlich höheren Widerstand gegen eine schnelle Rißfortpflanzung als die Rohrkörper entsprechend den Beispielen 3 und 4 aufwiesen. Aus einem Vergleich der Versuchsergebnisse der Beispiele 3 und 4 läßt sich außerdem ablesen, daß ein mit einem anderen β-Nukleierungsmittel extrudiertes Polypropylen mit einer überwiegenden β-Kristallisationsform ähnliche Widerstandswerte wie ein α-nukleiertes Polypropylen zeigt. Entsprechend der Norm DIS 13 477 kann somit festgehalten werden, daß lediglich die Rohrkörper gemäß den Beispielen 1 und 2 keine Rißausbildung mit hoher Geschwindigkeit aufweisen.

## Patentansprüche

1. Rohr, insbesondere Druckrohr, mit einem aus Polypropylen extrudierten Rohrkörper, **dadurch gekennzeichnet, daß** der Rohrkörper aus einem Polypropylen in einer überwiegend hexagonal kristallisierten β-Form mit einem auf einem Amid basierenden Nukleierungsmittel besteht.

2. Rohr nach Anspruch 1, **dadurch gekennzeichnet, daß** das β-Nukleierungsmittel aus N,N'-Dicyclohexyl-2,6-Naphtalindicarboxamid besteht.

## Claims

1. A pipe, particularly a delivery pipe, comprising a polypropylene extruded pipe member, **characterised in that** the pipe member is made from a polypropylene in a predominantly hexagonal crystallised β form with an amide-based nucleation agent.

2. A pipe according to claim 1, **characterised in that** the β-nucleation agent consists of N,N'-dicyclohexyl-2,6-naphthalene dicarboxamide.

## Revendications

1. Tuyau, en particulier tuyau pour fluide sous pression, avec un corps de tuyau venant d'extrusion, en polypropylène, **caractérisé par le fait que** le corps de tuyau est constitué d'un polypropylène se présentant sous une forme β à cristallisation majoritairement hexagonale, avec un agent de nucléation basé sur une amide.

2. Tuyau selon la revendication 1, **caractérisé par le fait que** l'agent de nucléation β est constitué de N,N'-dicyclohexyl-2,6-naphtalinedicarboxamide.
